# EUROPÄISCHE PATENTSCHRIFT

(11) **EP 1 870 072 B1**
(45) Veröffentlichungstag und Bekanntmachung des Hinweises auf die Patenterteilung: **18.12.2013**
(21) Anmeldenummer: 07012083.7
(22) Anmeldetag: 20.06.2007
(51) Int. Cl.: A61J 7/00, A61J 7/04

(54) **Vorrichtung zur kontrollierten Verabreichung von Medikamenten an einen Patienten**
Device for controlled dosage of medicines for a patient
Dispositif destiné à l'administration contrôlée de médicaments à un patient

(30) Priorität: 20.06.2006 DE 102006028726
(43) Veröffentlichungstag der Anmeldung: 26.12.2007
(73) Patentinhaber: Breiner, Karl-Heinz, 52066 Aachen (DE)
(72) Erfinder: Breiner, Karl-Heinz, 52066 Aachen (DE)
(74) Vertreter: Naeven, Ralf

(56) Entgegenhaltungen:
- EP-A- 1 726 524
- DE-U1-202004 007 670
- US-A- 5 646 912
- US-A1- 2006 097 000
- US-B1- 6 505 461

## Beschreibung

Die Erfindung betrifft einen Medikamentenspender. Im Stand der Technik sind lediglich Medikamentspender bekannt, die sich besonders für die Einnahme von Medikamenten bei älteren Menschen eignen, die ihren Alltag noch selbständig bewältigen, jedoch zu Vergesslichkeit neigen oder in den Anfängen an Demenz leiden. Hier bietet ein vorgenannter Medikamentenspender die Möglichkeit, Rationen von Medikamenten für einige Tage vorzubereiten und den Patienten zu festgelegten Zeiten an die Einnahme dieser zu erinnern. Dabei kann das Signal automatisch mit Hilfe eines Zeitschalters und je nach Anforderung akustisch und/oder optisch erfolgen, so dass es sowohl für Patienten mit schlechtem Hörvermögen oder mit beeinträchtigtem Sehvermögen wahrgenommen werden kann. Die Vordosierung erweist sich ebenso als Vorteil, da verschiedene Medikamente, beispielsweise in Form von Pillen oder Kapseln in den Fächern des Spenders Platz finden. So können Verwechselungen oder dem Vergessen einzelner Bestandteile der Medikamentenration seitens des Patienten vorgebeugt werden.

Ein Medikamentenspender, der die Verabreichung von Medikamenten mit einem Minimum an Mitwirkung des Patienten gewährleisten soll, geht aus der DE 103 02 423 A1 hervor. Der Spender verfügt zusätzlich über einen Entnahmesensor, der das Vorhandensein einer Medikamentenportion in der Entnahmeposition überwacht wobei bei Vorhandensein einer Medikamentenportion ein Signalgeber aktiviert wird, so dass der Patient an das Einnehmen der Medikamente erinnert wird.

Nachteil an den im Stand der Technik aufzufindenden Medikamentenspendem ist die fehlende Möglichkeit, die tatsächliche Einnahme des Medikamentes überprüfen zu können. Da es sich bei dem Kreis der Anwender dieser Spender hauptsächlich um ältere Personen handelt, die noch im Stande sind sich selbst zu verpflegen, jedoch nicht absolut zuverlässig sind in Bezug auf die Einnahme von Medikamenten, nicht zuletzt aufgrund mangelnder Akzeptanz der einzunehmenden Mittel, wird eine Einnahmekontrolle unabdingbar.

Eine solche Einnahmekontrolle wird typischer Weise durch einen Pflegedienst übernommen, der die Patienten gegebenenfalls mehrmals am Tag aufsucht, lediglich um eine Medikamentenration zu verabreichen, beziehungsweise um die Einnahme durch den Patienten zu überwachen. Oftmals ist es sogar erforderlich, dass der Patient nach dem Schlucken der Medikamente den Mund öffnen muss, so dass der Pfleger sich davon überzeugen kann, dass der Patient nicht versucht hat, das Medikament im Mund zu "verstecken", um es später wieder ausspucken zu können.

Obwohl ein derartiger Besuch des Pflegers bei einem Patienten nur wenige Minuten dauert, birgt diese "Dienstleistung" erhebliche Kosten für den Patienten. Aus diesem Grund ist es in einigen Fällen aus Kostengründen erforderlich, einen Patienten aus seiner gewohnten Umgebung zu nehmen und in einer Einrichtung wie beispielsweise "betreutes Wohnen" oder in einem "Altersheim" unterzubringen. Gerade für ältere Menschen, die im Großen und Ganzen noch in der Lage sind, sich selbst zu versorgen, ist diese Alternative undenkbar.

Dokument US5646912 offenbart einen Medikamentenspender mit den technischen Merkmalen des Oberbegriffs des Anspruchs 1.

Daher ist es Aufgabe der vorliegenden Erfindung, einen bekannten Medikamentenspender derart weiterzuentwickeln, dass er eine sichere Dosierung ermöglicht. Diese Aufgabe wird gelöst durch einen Medikamentenspender nach Anspruch 1.

Der erfindungsgemäße Medikamentenspender weist somit eine Medikamentendosiereinrichtung und eine Kamera auf, wobei die Kamera dazu benutzt werden kann, die Medikamentendosierung und/oder die Medikamenteneinnahme zu Überwachen. Dadurch wird eine besonders sichere Medikamenteneinnahme ermöglicht.

Vorteilhaft ist es, wenn die Medikamentendosiereinrichtung ein Befüllrad mit mehreren Medikamentenkompartments und einem unten öffnenbaren oder geöffneten Kompartment aufweist. Dies ermöglicht es im Befüllrad für mehrere Tage die Medikamentenportionen so anzuordnen, dass in jeweils einem Kompartment für einen Einnahmezeitpunkt alle Medikamente angeordnet sind. Beispielsweise können für einen Tag drei Medikamentenkompartments vorgesehen sein, die eine Medikamentendosierung für morgens, mittags und abends ermöglichen. Im Befüllrad ist ein unten öffenbares oder geöffnetes Kompartment vorgesehen, das es ermöglicht, beim Drehen des Befüllrads über einen Zuführschacht die im Kompartment zusammengestellten Medikamente in den Zuführschacht fallen zu lassen.

Da ein Befüllrad immer nur eine bestimmte Menge an Kompartments und somit Medikamentendosierungen aufweist, wird vorgeschlagen, dass die Medikamentendosiereinrichtung mehrere Befüllräder aufweist. Dadurch kann die Menge der Medikamente im Spendergehäuse deutlich erhöht werden, wodurch über längere Zeitintervalle keine Nachfüllung des Spendergehäuses mehr notwendig ist. Diese Befüllräder können beispielsweise übereinander angeordnet werden, so dass bei identischen Befüllrädern ein Kompartment eines oberen Befüllrades durch ein Kompartment des darunter liegenden Befüllrads in den Befülltrichter entleert werden kann.

Besonders vorteilhaft ist es, wenn das Gehäuse einen Slot für ein Befüllrad aufweist. Derartige Slots sind beispielsweise aus dem Bereich der Computergehäuse bekannt und erlauben dort das Austauschen von scheibenartigen Datenträgern. Ähnliche Einrichtungen können auch für das Austauschen von Befüllrädern an der Medikamentenbefülleinrichtung verwendet werden.

Um erkannte falsche Medikamentendosierungen auszuschleusen, wird vorgeschlagen, dass die Medikamentendosiereinrichtung eine Medikamentenausschlussweiche aufweist. Beispielsweise kann innerhalb eines Medikamententrichters eine Medikamentenaussortierklappe vorgesehen sein, die den Medikamentenfluss in Richtung eines Fehlmedikamentensammelbehälters leitet. Somit können erkannte fehlerhafte Medikamentenzusammenstellungen im Befüllrad auf einfache Art und Weise ausgeschleust werden.

Über die Kamera besteht somit die Möglichkeit zur Selbstkontrolle oder Selbstdiagnose des Medikamentenspenders mit einer Übermittlung des Fehlers an eine Zentrale. Außerdem kann in Intervalle mittels eines Servers geprüft werden, ob die Medikamente im Gerät verfügbar sind. So lange wie das Medikamentenrad eingeschoben ist kann auch visuell von einer Zentrale aus über die Kamera geprüft werden, ob die Medikamente vorhanden sind und richtig im Medikamentenrad liegen.

Um fehlerhafte Befüllungen im Befüllrad festzustellen, wird vorgeschlagen, dass die Kamera auf ein Befüllrad richtbar ist. Die Kamera kann hierbei direkt oder über einen Spiegel auf das Befüllrad gerichtet sein.

Vorteilhaft ist es, wenn die Medikamentendosiereinrichtung eine Medikamentenbefülleinrichtung und ein Medikamenteneinnahmebehältnis aufweist. Das Medikamenteneinnahmebehältnis ist vorzugsweise als durchsichtiger Becher ausgebildet und dient dazu, darin die Summe der Medikamente im Gehäuse zusammenzustellen, eine nochmalige Prüfung des Behältnisinhalts zu ermöglichen und anschließend das Medikamenteneinnahmebehältnis aus dem Spendergehäuse freizugeben. Hierbei ist es sinnvoll, wenn die Kamera auf das Medikamenteneinnahmebehältnis richtbar ist. Der Strahl der Kamera kann auch hierbei wiederum direkt auf das Medikamenteneinnahmebehältnis oder über einen Spiegel dorthin gerichtet sein.

Eine Kamera ist auf ein Fenster im Gehäuse richtbar. Dadurch kann die Kamera durch ein Fenster im Gehäuse auf eine außerhalb des Gehäuses befindliche Person gerichtet werden. Dies erleichtert die Kommunikation mit einem Nutzer des Medikamentenspenders und ermöglicht es insbesondere auch die Einnahme des Medikaments zu prüfen.

Um zu prüfen, ob der Patient das Medikament in die Mundhöhle gelegt hat, ist, unterhalb des Fensters eine Kinnablage angeordnet. Diese Kinnablage ermöglicht eine Positionierung des geöffneten Mundes eines Patienten vor dem Fenster, so dass mit der Kamera der Mundinhalt überprüft werden kann.

Vorteilhaft ist es, wenn die Kinnablage einen Druckschalter aufweist. Ein derartiger Druckschalter zeigt die Ablage des Kinns auf der Kinnablage und er kann dazu verwendet werden, die Fokussierung der Kamera auf eine vor der Kamera angeordnete Mundhöhle einzustellen, oder auch eine Beleuchtung anzuschalten.

Da bei einer Kamera innerhalb eines Raums zumindest theoretisch immer die Möglichkeit besteht, dass über die Kamera persönliche Dinge aufgenommen werden, wird vorgeschlagen, dass das Fenster verschließbar ist. Vorzugsweise weist das Fenster eine Schiebeklappe oder eine Schwenkklappe auf, die dem Patienten deutlich zeigt, wann die Kamera verwendet werden kann und wann mit der Kamera keine Bilder aus dem Gehäuse heraus aufgenommen werden können. Vorzugsweise ist die Klappe zum Verschließen der Kamera innerhalb des Gehäuses durch eine ferngesteuerte Einrichtung betätigbar. Dies ermöglicht es, das Fenster ferngesteuert aber für den Patienten sichtbar zu verschließen.

Insbesondere zur Ausleuchtung einer Mundhöhle wird vorgeschlagen, dass im Bereich des Fensters eine blendarme Beleuchtung angeordnet ist. Als blendarme Beleuchtung werden spezielle Leuchten insbesondere mit Kaltlicht vorgeschlagen, die mit speziellen Kameras beispielsweise Pan Tilt zusammenwirken.

Eine Vielzahl an Möglichkeiten ergeben sich, wenn die Kamera mit einer Bildauswerteeinrichtung in Verbindung steht. Diese Bildauswerteeinrichtung kann innerhalb des Spendergehäuses angeordnet sein, oder auf einem Server liegen, der über ein Netzwerk mit dem Spendergehäuse in Verbindung steht. Die Bildauswerteeinrichtung kann dazu dienen, die Tabletten im Befüllrad zu prüfen oder auch die Tabletten im Medikamenteneinnahmebehältnis zu kontrollieren. Außerdem kann mit einer Bildauswerteeinrichtung am Gebiss von Patienten der richtige Patient ermittelt werden. Die Bildauswerteeinrichtung erleichtert somit eine Kontrolle, die sonst vom Dienstpersonal durchgeführt werden sollte.

Der Medikamentenspender kann mittels eines danebenstehenden Telfons oder eines Netzanschlusses über das Internet vollständig bedient werden und auch die Kommunikation kann über ein Telefon erfolgen. Vorteilhaft ist es jedoch wenn das Gehäuse eine Einrichtung für eine sprachgestützte und vorzugsweise eine bildgestützte Telekommunikation aufweist.

Vorteilhaft ist es weiterhin, wenn der Medikamentenspender eine externe Einheit und eine Datenübertragungseinrichtung zwischen Spendergehäuse und externer Einrichtung umfasst, wobei die Datenübertragung durch eine an dem Spendergehäuse vorgesehene Betätigungseinrichtung aktivierbar ist und wobei die Medikamentendosiereinrichtung durch die externe Einheit bedienbar und kontrollierbar ist.

Das Medikamentenspendergehäuse sowie Bestandteile der Datenübertragungseinrichtung der erfindungsgemäßen Vorrichtung werden im Wohnbereich eines Patienten aufgestellt. Dabei umfassen die Bestandteile der Datenübertragungseinrichtung Mittel zur Übertragung von visuellen Daten zwischen Spendergehäuse und externer Einheit, die sich in der Wohnung eines Verwandten des Patienten oder in einer zentralen Pflegedienststelle befinden kann.

Mit Hilfe einer Betätigungseinrichtung der Datenübertragungseinrichtung kann der sich an der externen Stelle befindliche Pfleger zu gegebener Zeit ein Signal im Bereich des bei dem Patienten befindlichen Spendersgehäuses auslösen, so dass der Patient darauf aufmerksam gemacht wird, dass er nun eine Medikamentenration einzunehmen hat. Das Signal kann über die Bestandteile der Datenübertragungseinrichtung oder über einen im Bereich des Spendergehäuses befindlichen Signalgeber ausgegeben werden. Das Signal soll den Patienten dazu veranlassen, sich zu dem Spendergehäuse zu begeben, wo er durch seine Eigeninitiative über eine an dem Spendergehäuse vorgesehene Betätigungseinrichtung die Datenübertragung zwischen Spendergehäuse und externer Einheit aktivieren kann, demnach unter anderem die visuelle Datenübertragung, mittels der ein ggf. gegenseitiger Sichtkontakt zwischen Patient und Pfleger aufgebaut wird.

Auf die Anwesenheit des Patienten reagiert der Pfleger mit der Aktivierung des Spendergehäuses, wodurch die von dem Patienten einzunehmende Medikamentenration ausgegeben wird. Zweckmäßiger Weise wird die Medikamentenration in einen durchsichtigen Behälter gegeben, so dass der Pfleger über die Mittel der visuellen Datenübertragung die Ausgabe des Medikamentes sowie die Einnahme durch den Patienten verfolgen kann.

Nach der Einnahme des Medikamentes öffnet der Patient seinen Mund, bewegt gegebenenfalls seine Zunge und der Pfleger kann die Einnahme des Medikamentes kontrollieren. Auf diese Weise ist eine einfache, sichere und dennoch kostengünstige Möglichkeit zur Einnahmekontrolle von Medikamenten geschaffen, ohne dass es erforderlich würde, den Patienten aus seiner gewohnten Umgebung in eine andere Einrichtung verlegen zu müssen.

Für den Fall, dass der Patient nach der anfänglichen Erzeugung des Signals aus gesundheitlichen Gründen oder infolge eines Unfalls im Haushalt (Sturz) nicht in der Lage ist, zu dem Medikamentenspendergehäuse zu gelangen, wird der Pfleger aufgrund der fehlenden Aktivierung der Datenübertragung auf ein mögliches Problem aufmerksam. Ein Besuch bei dem Patienten ist dann unerlässlich.

Eine Ausgestaltung der Erfindung sieht vor, dass die von der externen Einheit an den Medikamentenspender übertragenen Daten Audiodaten umfassen. So besteht für den Pfleger die Möglichkeit, dem Patienten eventuell erforderliche Anweisungen oder Erklärungen zu geben.

Vorteilhafterweise umfassen die zwischen dem Medikamentenspendergehäuse und der externer Einheit übertragenen Daten wechselseitig Audiodaten, wodurch neben einem wechselseitigen Sichtkontakt ebenso ein gegenseitiger Hörkontakt ermöglicht ist. So kann vor der Medikamenteneinnahme zunächst ein kurzer Informationsaustausch erfolgen, der entweder persönlichen Charakter hat oder sich auf das Befinden des Patienten beziehen kann. Eine derartige Medikamenteneinnahme ist für den Patienten deutlich persönlicher und somit auch angenehmer.

Ferner sieht eine Ausgestaltung der Erfindung vor, dass die Datenübertragungseinrichtung an der externen Einheit sowie an dem Medikamentenspendergehäuse jeweils mindestens eine Kamera, einen Bildschirm, ein Mikrophon und einen Lautsprecher umfasst. Die Positionierung der Kamera an dem Spendergehäuse sollte so gewählt werden, dass sowohl die Ausgabe des Medikamentes aus dem Medikamentenspender als auch der Patient während der Medikamenteneinnahme gut sichtbar ist.

Gegebenenfalls kann die Anordnung von mehreren Kameras sinnvoll sein, wobei eine Kamera direkt auf die Medikamentenausgabe und eine andere Kamera auf den Patienten gerichtet ist. Eventuelle Defekte an dem Medikamentenspender, aufgrund dessen womöglich keine Medikamentenausgabe erfolgen könnte, können somit durch den Pfleger festgestellt werden.

Auch kann so nachvollzogen werden, ob der Patient tatsächlich das Medikament aus der Ausgabe nimmt, oder dieses nur vortäuscht. Die Datenübertragung verschiedener Bilder auf den Bildschirm des Pflegers kann dabei entweder nacheinander erfolgen oder zeitgleich auf nebeneinander angeordneten Bildern des Bildschirms.

Vorzugsweise umfasst die Datenübertragungseinrichtung eine Funkfernsteuerung, Mittel zur Internetdatenübertragung und/oder eine Telekommunikationseinrichtung.

Bei einer bevorzugt verwendeten Ausgestaltung der Vorrichtung verfügt sowohl das Spendergehäuse als auch die externe Einheit über jeweils einen Signalgeber, die an eine gemeinsame Zeitsteuerung gekoppelt sind, und zu festgelegten Einnahmezeiten ein akustisches und/oder optisches Signal und/oder Vibrationssignal erzeugen, wobei die gemeinsame Zeitsteuerung ein integriertes Element des Medikamentenspenders sein kann. Dass das Signal ebenfalls bei dem Pfleger generiert wird, hat den Vorteil, dass an der externen Einheit kein Zeitplan mit Einnahmezeiten einzelner Patienten vorliegen muss. Weiterhin entfällt bei einem Schichtwechsel der Pfleger die Einweisung, welche Patienten bereits versorgt worden sind oder noch versorgt werden müssen.

Vorteilhafterweise sind die Signalgeber transportabel. Insbesondere für Patienten mit Seh- und/oder Hörbeeinträchtigung ist es von Vorteil, wenn die Signalgeber ein Vibrationssignal erzeugen. Der Patient kann sich in seiner Wohnung frei bewegen, ohne Gefahr zu laufen, das Signal nicht wahrzunehmen. Ebenso für den Pfleger ist ein transportabler Signalgeber von Vorteil, da er sich ohne Risiko von der externen Einheit wegbegeben kann.

Schließlich sieht eine Ausgestaltung der Erfindung vor, dass die an dem Medikamentenspendergehäuse vorgesehene Betätigungseinrichtung über einen Bewegungsmelder zur Aktivierung der Datenübertragung verfügt. Dadurch wird die erfindungsgemäße Vorrichtung auch anwendbar für Patienten, die aufgrund ihrer gesundheitlichen Situation kaum oder nicht mehr in der Lage sind, eine Betätigungseinrichtung aktiv zu betätigen.

Die Erfindung wird nachfolgend anhand eines in den Figuren dargestellten Ausführungsbeispiels erläutert:
Es zeigt
- Figur 1: eine schematische Darstellung einer Vorrichtung zur kontrollierten Verabreichung von Medikamenten,
- Figur 2: eine schematische Darstellung eines Spendergehäuses und
- Figur 3: eine schematische Darstellung eines geöffneten Spendergehäuses.

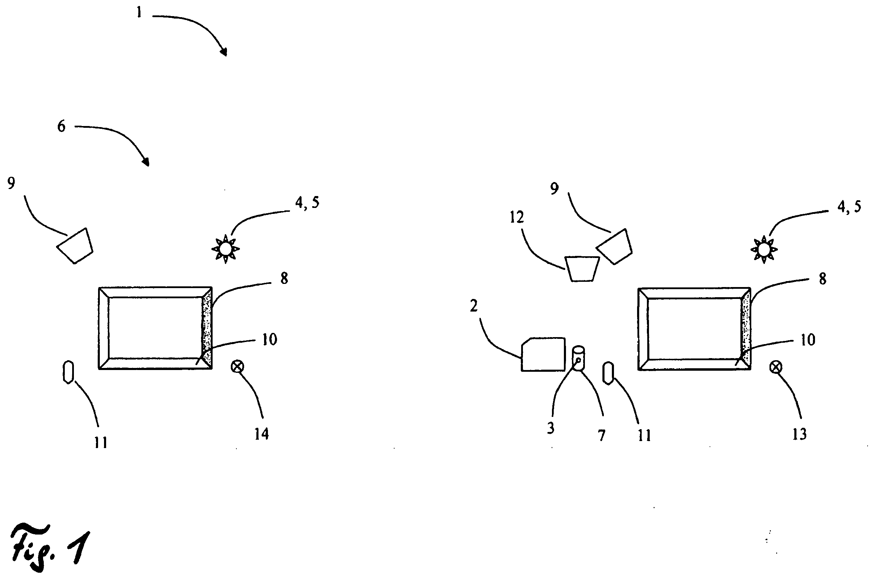

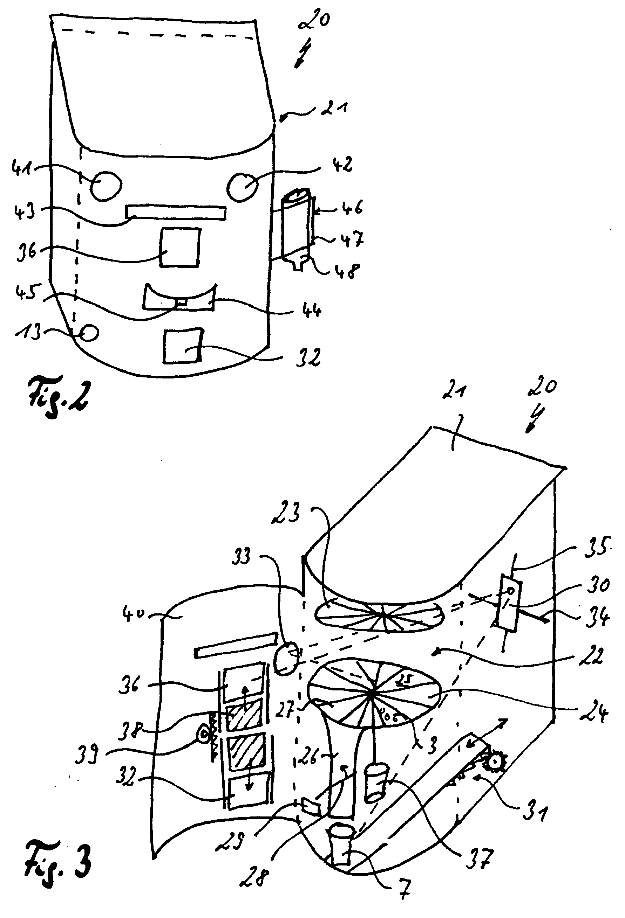

Die Figur 1 zeigt eine schematische Darstellung der erfindungsgemäßen Vorrichtung 1 zur kontrollierten Verabreichung von Medikamenten an einen Patienten. Im Wohnbereich des Patienten befindet sich ein Medikamentenspendergehäuse 2, das die Medikamentenrationen 3 von mindestens einer Woche beinhaltet. Das Medikamentenspendergehäuse 2 ist mit einer Zeitsteuerung ausgestattet, die zu gegebenen Einnahmezeiten über transportable Signalgeber 4 ein Signal 5 an dem Medikamentenspendergehäuse 2 und an einer externen Stelle 6 erzeugt. Die Ausgabe der Medikamentenrationen 3 zu vorgegebenen Einnahmezeiten erfolgt in einen durchsichtigen Becher 7. Die Funktionsweise eines Medikamentenspendersgehäuses 2 ist in den Figuren 2 und 3 genauer dargestellt.

Zur Datenübertragung zwischen dem Medikamentenspendergehäuse 2 und der externen Einheit 6 wird eine Datenübertragungseinrichtung herangezogen, die sowohl an dem Medikamentenspendergehäuse 2 als auch an der externen Einheit 6 über einen Monitor 8, eine Kamera 9, einen im Monitor eingebauten Lautsprecher 10 und ein Mikrophon 11 verfügt, so dass eine Sicht- und Hörverbindung aufgebaut werden kann. An dem Medikamentenspendergehäuse 2 des Patienten kann eine zweite Kamera 12 angebracht sein, die so ausgerichtet ist, dass sie den transparenten Becher 7 neben dem Medikamentenspender 2 erfasst. Die Datenübertragung zwischen dem Patienten und einem an der externen Einheit 6 befindlichen Pfleger erfolgt über eine Funkfernsteuerung. Alternativ kann die Datenübertragung auch mit Mitteln zur Internetdatenübertragung oder zur Telekommunikation erfolgen.

Durch die über die mobilen Signalgeber 4 abgegebenen Akustik- oder Vibrationssignale 5 zu den vorgegebenen Einnahmezeiten werden sowohl der Pfleger als auch der Patient dazu angehalten, sich zu der externen Einheit 6 beziehungsweise zu dem Medikamentenspendergehäuse 2 zu begeben. Der Patient aktiviert durch seine Eigeninitiative über eine an dem Medikamentenspender 2 vorgesehene Betätigungseinrichtung 13 die Datenübertragung zwischen Medikamentenspendergehäuse 2 und externer Einheit 6, so dass ein Sicht- und Hörkontakt zwischen Pfleger und Patient besteht. Nach einer Begrüßung und einem eventuellen Informationsaustauschs hinsichtlich des Befindens des Patienten bedient der Pfleger mit Hilfe einer Betätigungseinrichtung 14 der Datenübertragungseinrichtung das Medikamentenspendergehäuse 2, wodurch eine Medikamentenration 3 in den durchsichtigen Becher 7 ausgegeben wird. Diesen Vorgang kann der Pfleger auf seinem Bildschirm 8 verfolgen. Ebenso die Einnahme des Medikamentes durch den Patienten kann über den Bildschirm 8 von dem Pfleger überwacht werden. Schließlich erfolgt die Kontrolle der Medikamenteneinnahme dadurch, dass der Patient seinen Mund vor der Kamera 9 öffnet, so dass der Pfleger sich davon überzeugen kann, dass der Patient das Medikament wirklich geschluckt hat.

Die Figur 2 zeigt einen Medikamentenspender 20 mit einem Spendergehäuse 21 indem eine Medikamentendosiereinrichtung 22 angeordnet ist. Diese Medikamentendosiereinrichtung 22 weist ein oberes Befüllrad 23 und ein unteres Befüllrad 24 auf. Die Befüllräder bestehen aus mehreren Medikamentenkompartments 25, die tortenstückartig auf dem Befüllrad als nach oben geöffnete Behältnisse angeordnet sind. Eines der Kompartments befindet sich über einem Befüllschacht 26, in den das nach unten öffnenbare Kompartment 27 entleerbar ist. Eine Klappe 28 im Befüllschacht 26 ermöglicht als Medikamentenflussweiche das Ausschleusen von falschen Medikamentenzusammenstellungen in einen Auswurfbehälter 29. Eine mit der Kamera 30 überprüfte Medikamentenration 3, die ordnungsgemäß zusammengestellt ist, fällt hingegen durch den Schacht 26 in den Becher 7. Eine Verschiebemechanik 31 kann daraufhin den Becher 7 durch eine Medikamentenausgabeöffnung 32 aus dem Gehäuse heraus freigeben.

Die Kamera 30 kann hierbei über einen Spiegel 33 die ordnungsgemäße Befüllung des Befüllrads 24 prüfen und durch Schwenken der Kamera 30 auf einer Achse 34 und insbesondere um eine weitere hierzu senkrecht stehende Achse 35 kann die Kamera entweder direkt oder über einen Spiegel sowohl die Befüllung des Bechers 7 kontrollieren als auch durch das Fenster 36 aus dem Spendergehäuse 21 heraus auf den Patienten schauen.

Eine Motorgetriebeeinheit 37 dreht das Befüllrad im inkrementalen Schritten nach jedem Dosiervorgang einen Schritt weiter, so dass das nächste angrenzende Kompartment über dem Befüllschacht 26 liegt und die nächste Dosierung in den Behälter 7 gelangen kann.

Während die Dosierung vorgenommen wird, können sowohl das Fenster 36 als auch die Medikamentenausgabeöffnung 32 geschlossen bleiben. Hierzu ist eine Fensterklappe 38 vorgesehen, die mittels einer Mechanik 39 vor die Medikamentenausgabeöffnung 32 und das Fenster 36 geschoben werden kann.

Zur einfacheren Revision weist das Spendergehäuse 21 eine vordere Türe 40 auf, in der zwei Lautsprecher 41 und 42, ein Slot 43 zum Austauschen von Befüllrädern 23, 24 und das Fenster 36 vorgesehen sind. Außerdem ist an der Außenseite der Türe 40 die Kinnauflage 44 mit einem Druckschalter 45 vorgesehen. Letztlich befinden sich im Bereich der Türe 40 die Betätigungseinrichtung 13 und die Medikamentenausgabe 32.

Zur Erleichterung der Medikamenteneinnahme ist an der Seite des Spendergehäuses 21 ein Getränkespender 46 vorgesehen, der aus einer Halterung 47 und einer darin angeordneten Flasche 48 besteht.

Die Kamera 30 steht mit einer außerhalb des Spendergehäuses 21 angeordneten, nicht gezeigten Bildauswerteeinrichtung in Verbindung und die Kamera 30 sowie die Lautsprecher 41 und 42 sind Teile für eine Einrichtung für eine sprachgestützte und bildgestützte Telekommunikation.

## Patentansprüche

1. Medikamentenspender, umfassend ein ein Fenster (36) aufweisendes Spendergehäuse (2, 21), eine Medikamentendosiereinrichtung (22) und Einnahmekontrollmittel zur Kontrolle der Einnahme eines Medikaments (3) durch einen Patienten, wobei
a) die Einnahmekontrollmittel mindestens eine Kamera (9, 30) umfassen, welche durch das Fenster (36) hindurch auf einen außerhalb des Spendergehäuses (2, 21) befindlichen Bereich richtbar ist und
b) eine Datenübertragungseinheit für eine wechselseitige audiovisuelle Kommunikation mit einer externen Kontrolleinheit (6) vorgesehen ist,
**dadurch gekennzeichnet, dass**
c) für die Einnahmekontrolle zur Mundpositionierung eine Kinnablage (44) für eine den Medikamentenspender (20) nutzende Person vorgesehen ist.

2. Medikamentenspender nach Anspruch 1, **dadurch gekennzeichnet, dass** das Fenster (36) verschließbar ist.

3. Medikamentenspender nach Anspruch 1oder 2, **dadurch gekennzeichnet, dass** die Medikamentendosiereinrichtung (22) ein Befüllrad mit mehreren Medikamentenkompartments (25, 27) zur Aufnahme von einzelnen, vor Auswurf mittels der mindestens einen Kamera (9, 30) visuell kontrollierbare und für bestimmte Einnahmezeitpunkte vorgesehene Medikamentendosierungen aufweist.

4. Medikamentenspender nach Anspruch 3, **dadurch gekennzeichnet, dass** die Medikamentendosiereinrichtung (22) mehrere Befüllräder (23, 24) umfasst.

5. Medikamentenspender nach Anspruch 3 oder 4, **dadurch gekennzeichnet, dass** das Spendergehäuse (2, 21) einen Slot für das mindestens eine Befüllrad (23, 24) aufweist.

6. Medikamentenspender nach einem der vorhergehenden Ansprüche, **dadurch gekennzeichnet, dass** die Medikamentendosiereinrichtung (22) eine Medikamentenflussweiche (28) aufweist.

7. Medikamentenspender nach einem der vorhergehenden Ansprüche, **dadurch gekennzeichnet, dass** ein aus der Medikamentendosiereinrichtung (22) zu füllendes Medikamenteneinnahmebehältnis (7) vorgesehen ist und eine Kamera (9, 30) auf das Medikamenteneinnahmebehältnis (7) richtbar oder gerichtet ist,

8. Medikamentenspender nach einem der vorhergehenden Ansprüche, **dadurch gekennzeichnet, dass** die Medikamentendosiereinrichtung (22) eine Medikamentenbefülleinrichtung aufweist.

9. Medikamentenspender nach einem der vorhergehenden Ansprüche, **dadurch gekennzeichnet, dass** die Kinnablage (44) einen Druckschalter (45) aufweist.

10. Medikamentenspender nach einem der vorhergehenden Ansprüche, **dadurch gekennzeichnet, dass** mindestens eine der Kameras (9, 30) mit einer Bildauswerteeinrichtung in Verbindung steht.

11. Medikamentenspender nach einem der vorhergehenden Ansprüche, **dadurch gekennzeichnet, dass** der Medikamentenspender durch die externe Kontrolleinheit (6) bedienbar und kontrollierbar ist.

## Claims

1. Medicine dispenser, comprising a dispenser housing (2, 21) having a window (36), a medicine-dosing mechanism (22), and intake control means for controlling the intake of a medicine (3) by a patient, wherein
a) the intake control means comprise at least one camera (9, 30), which can be directed right through the window (36) onto an area located outside the dispenser housing (2, 21), and
b) a data transmission unit is provided for reciprocal audiovisual communication with an external control unit (6),
**characterized in that**
c) for the intake control, a chin rest (44) for positioning the mouth is provided for a person using the medicine dispenser (20).

2. Medicine dispenser according to Claim 1, **characterized in that** the window (36) is closeable.

3. Medicine dispenser according to Claim 1 or 2, **characterized in that** the medicine-dosing mechanism (22) has a filling wheel with a plurality of medicine compartments (25, 27) for receiving individual medicine doses that can be visually controlled by means of the at least one camera (9, 30) before ejection and are provided for specific intake times.

4. Medicine dispenser according to Claim 3, **characterized in that** the medicine-dosing mechanism (22) comprises a plurality of filling wheels (23, 24).

5. Medicine dispenser according to Claim 3 or 4, **characterized in that** the dispenser housing (2, 21) has a slot for the at least one filling wheel (23, 24).

6. Medicine dispenser according to one of the preceding claims, **characterized in that** the medicine-dosing mechanism (22) has a medicine sluice (28).

7. Medicine dispenser according to one of the preceding claims, **characterized in that** a medicine container (7) to be filled from the medicine-dosing mechanism (22) is provided, and a camera (9, 30) can be directed or is directed at the medicine container (7).

8. Medicine dispenser according to one of the preceding claims, **characterized in that** the medicine-dosing mechanism (22) has a medicine-filling mechanism.

9. Medicine dispenser according to one of the preceding claims, **characterized in that** the chin rest (44) has a pressure switch (45).

10. Medicine dispenser according to one of the preceding claims, **characterized in that** at least one of the cameras (9, 30) is connected to an image evaluation device.

11. Medicine dispenser according to one of the preceding claims, **characterized in that** the medicine dispenser can be operated and controlled by the external control unit (6).

## Revendications

1. Distributeur de médicaments, comprenant un boîtier de distributeur (2, 21) qui présente une fenêtre (36), un dispositif de dosage de médicament (22) et des moyens de contrôle de prise pour contrôler la prise d'un médicament (3) par un patient, avec lequel
a) les moyens de contrôle de prise comprennent au moins une caméra (9, 30) qui peut être dirigée à travers la fenêtre (36) sur une zone qui se trouve à l'extérieur du boîtier de distributeur (2, 21) et
b) il est prévu une unité de transmission de données pour une communication audiovisuelle mutuelle avec une unité de contrôle (6) externe,
**caractérisé en ce que**
c) pour le contrôle de la prise un support de menton (44) destiné au positionnement de la bouche est prévu pour une personne qui utilise le distributeur de médicaments (20).

2. Distributeur de médicaments selon la revendication 1, **caractérisé en ce que** la fenêtre (36) peut être fermée.

3. Distributeur de médicaments selon la revendication 1 ou 2, **caractérisé en ce que** le dispositif de dosage de médicament (22) présente une roue de remplissage comprenant plusieurs compartiments à médicament (25, 27) destinés à accueillir des dosages de médicament individuels, contrôlables visuellement à l'aide de l'au moins une caméra (9, 30) avant l'éjection et prévus pour des instants de prise donnés.

4. Distributeur de médicaments selon la revendication 3, **caractérisé en ce que** le dispositif de dosage de médicament (22) comprend plusieurs roues de remplissage (23, 24).

5. Distributeur de médicaments selon la revendication 3 ou 4, **caractérisé en ce que** le boîtier de distributeur (2, 21) présente un slot pour l'au moins une roue de remplissage (23, 24).

6. Distributeur de médicaments selon l'une des revendications précédentes, **caractérisé en ce que** le dispositif de dosage de médicament (22) présente un dispositif d'aiguillage du flux de médicament (28).

7. Distributeur de médicaments selon l'une des revendications précédentes, **caractérisé en ce qu'**il est prévu un récipient de prise de médicament (7) à remplir par le dispositif de dosage de médicament (22) et une caméra (9, 30) peut être dirigée ou est dirigée sur le récipient de prise de médicament (7).

8. Distributeur de médicaments selon l'une des revendications précédentes, **caractérisé en ce que** le dispositif de dosage de médicament (22) présente un dispositif de remplissage de médicament.

9. Distributeur de médicaments selon l'une des revendications précédentes, **caractérisé en ce que** le support de menton (44) présente un commutateur à poussoir (45).

10. Distributeur de médicaments selon l'une des revendications précédentes, **caractérisé en ce qu'**au moins l'une des caméras (9, 30) est en liaison avec un dispositif d'interprétation d'image.

11. Distributeur de médicaments selon l'une des revendications précédentes, **caractérisé en ce que** le distributeur de médicaments peut être commandé et contrôlé par l'unité de contrôle (6) externe.
